# EUROPEAN PATENT SPECIFICATION

(11) **EP 2 603 460 B1**
(45) Date of publication and mention of the grant of the patent: **04.06.2014**
(21) Application number: 11740924.3
(22) Date of filing: 05.08.2011
(51) Int. Cl.: C02F 1/00, C02F 1/76, C02F 1/28, C02F 9/00

(54) **LOW COST WATER PURIFICATION DEVICE**
KOSTENGÜNSTIGE WASSERREINIGUNGSVORRICHTUNG
DISPOSITIF DE PURIFICATION D'EAU À FAIBLE COÛT

(30) Priority: 22.09.2010 EP 10178265; 09.08.2010 IN MU22422010
(43) Date of publication of application: 19.06.2013
(73) Proprietor: Unilever N.V., 3013 AL Rotterdam (NL); Unilever PLC, London EC4Y 0DY (GB)
(72) Inventor: CHANDRA, Franklin David, Bangalore 560 066 (IN); van de POLL, Jonkheer Hendrik Theodoor, NL-3133 AT Vlaardingen (NL); RAJANARAYANA, Venkataraghavan, Bangalore 560 066 (IN)
(74) Representative: Rosen Jacobson, Frans Lucas M.
(86) International application number: PCT/EP2011/063515
(87) International publication number: WO 2012/019969

(56) References cited:
- WO-A1-2005/095284
- WO-A1-2008/075976
- CA-A1- 1 182 758
- US-A- 3 744 639

## Description

### TECHNICAL FIELD

The present invention relates to low cost flexible and/or foldable water purification devices. In particular the invention relates to point of use water purification devices that do not require running water or electricity.

### BACKGROUND AND PRIOR ART

A large part of the population in the world lives in countries where there is severe shortage of hygienic potable water. A high percentage of these people live in rural and far flung areas where municipal drinking water treatment plants may not be present. People in these areas have to depend directly on ground and surface water sources. These water sources are often contaminated by sewage, industrial effluents and agricultural byproducts like pesticide residues.

The most common method of water purification is boiling which is a non-cost effective process as it requires large amounts of energy derived from fuel sources. Yet another method of water purification is the use of Ultraviolet (UV) radiation which requires electricity for the UV lamp. Boiling and UV treatment are mostly suitable to kill micro-organisms, and do not remove other contaminants. Yet another method is the use of reverse osmosis (RO), which primarily reduces Total Dissolved Solids (TDS) but can also 'filter' microbial contaminants. However, the method requires substantial pressure and uses a pump, requiring electrical energy. The requirement of uninterrupted electric supply for these devices is a major limitation. Gravity fed water filters are also know to be used in domestic water purification processes which do not require running water supply and electricity.

W02005095284 (Mistry et. al. 2005) discloses a gravity fed water purification system that comprises a filtration unit adapted to separate particulate and soluble material from the input water, which is in fluid communication with a chemical dispensing unit and a scavenger means to separate the dispensed biocide from the purified water. The water purification system has a flow control means to regulate the fluid flow to ensure desired dosage of biocide for the disinfection of water. However, it is observed that in a continuous process as disclosed in W02005095284 there is need to efficiently regulate the fluid flow by flow control means to ensure proper biocide dosage. However in a flexible device it is difficult to obtain constant fluid through a flow control means. A batch process removes the limitation of controlled fluid flow and provides for an efficient system to control the desired disinfection activity by controlling the residence time.

US3744639A (Teeple & Welsh, 1973) discloses a gravity fed water filter assembly comprising a substantially flat foldable sheet plastic container having a liquid inlet and a liquid outlet and particulate filtering media in the path of liquid flow in the container between the inlet and outlet. The filter media in the path of liquid flow consists of powder activated charcoal in one compartment and de-ionizing resin in another compartment. A flexible flow regulator is located at the restricted outlets between compartments. The filter assembly can be unfolded and filled with water. This invention addresses the problem of providing a purifier unit that is light weight and compact and can be easily carried. This filter assembly is designed to remove from non-salt water sources objectionable taste and odour and other water borne contaminants. The invention however doesn't give any indication to a means to removal of pathogenic viruses and bacteria from the water. However, the ability of powder activated charcoal and the resin as disclosed in US3744639 to effectively remove particulate and suspended particles from water leaves to be desired. It is further observed that the powder activated charcoal, the resin and the flexible flow regulators in the path of liquid flow may be difficult to drain and dry after use. Similarly, replacing the charcoal and resin, is difficult, if not impossible. It is also found that the use of a combination system of the resin and the activated biocidal charcoal does not bring about 6-log (10⁶) reduction of bacteria, 4-log (10⁴) reduction of viruses and 3-log (10³) reduction of cysts, as required by the US EPA standards. It is further observed that flow regulation provided by flexible flow regulators leaves to be desired when used for extended time period. It is further found that folding a device, albeit made of flexible material that contains large amounts of powdered charcoal and resin, is not easy.

Accordingly, a flexible and foldable water purification device that can be easily folded for shipment or moving and travelling, while meeting the US EPA standards for the reduction of bacteria, virus and cyst, by 6-log, 4-log and 3-log respectively, and being easy to empty and dry after use remains to be desired.

It has also been noticed that the devices disclosed in the prior art do not consider providing air vents in the chambers.

In this connection, the present inventors have found that providing air vents in the chambers such that pressure therein is equalized with the atmosphere, allow the flow of water to be facilitated without allowing for air-locks to form in the chambers.

### OBJECTS OF THE INVENTION

It is thus an object of the present invention to provide a low cost water purification device that provides for clean potable water.

It is another object of the invention to provide for a low cost water purification device that can be used and transported with ease from one place to another.

It is a further object of the invention that the purification functional units in the device are easily detachable and re-attachable, for improved foldability and provides for easy replacement of these units when spent.

It is yet another object of the invention to provide for a low cost water purification device that provides for easy installation.

It is still a further object that the foldable device can be drained and dried easily for transport and storage.

It is yet another object of the present invention to provide a low cost water purification device that can be easily folded and transported and that can be operated when hung or made to stand vertically.

It has been surprisingly found that sealing a foldable, flexible, plastic sheet material to form chambers by heat-sealing the plastic sheet material together and with incorporation of one or more filters and a disinfection cartridge, provides a light weight, low cost, foldable water purification device that can be fabricated.

### SUMMARY OF THE INVENTION

According to a first aspect, the present invention provides a light-weight point of use water purification device comprising a housing of flexible, foldable, plastic sheet material comprising an inlet chamber, formed by sealing a compartment into the plastic sheet material housing, comprising a sediment filter as water inlet point at the top of the inlet chamber; and a disinfection cartridge at the bottom of the inlet chamber; in fluid communication with the top of a dwell chamber provided with an air vent, formed by sealing a compartment into the plastic sheet material housing, in fluid communication with the top of a scavenger unit comprising a scavenger filter; and a valve.

According to a second aspect the invention provides a method for manufacturing the device according to the invention, comprising the steps of
(a) placing the disinfection cartridge, the scavenger filter, the valve and the inlet sediment filter between two layers of a plastic sheet material, inside the crease of a single folded sheet of plastic sheet material or inside a tubular sheet of the plastic sheet material;
(b) sealing the disinfection cartridge, the scavenger filter, the valve and optionally the inlet sediment filter to the plastic sheet material; and
(c) creating the chambers by sealing the plastic sheet material together; wherein steps (b) and (c) may be reversed and wherein the dwell chamber is provided with an air vent.

In a third aspect the invention provides a method for purifying water with the device of the invention, comprising the steps of
(a) filling the water to be purified into the inlet chamber of the device, and passing said water through the sediment filter,
(b) passing the water from the inlet chamber through the disinfection cartridge comprising a chemical that delivers the biocide to the water,
(c) allowing the water treated with the biocide and exiting the disinfection cartridge to flow into the dwell chamber,
(d) holding the water treated with the biocide in the dwell chamber for a period in the range of 2 to 200 minutes, more preferably in the range of 20 to 60 minutes, and
(e) opening the valve to allow the water to pass from the dwell chamber through the scavenger filter into the storage chamber. In the scavenger filter the water is made free of biocide and its by-products. As a result, the water flowing into the storage chamber is purified water suitable for human consumption.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### DETAILED DESCRIPTION OF THE INVENTION

Thus the present invention provides for a water purification device comprising a housing of flexible, foldable, plastic sheet material, the housing comprising an inlet chamber, a dwell chamber and a scavenger unit.

### Plastic sheet material

The housing is made of a flexible, foldable plastic sheet material. The preferred thickness of the flexible sheet material is between 20 micrometers to 3000 micrometers, preferably 75 to 1500 micrometers, more preferably between 100 and 500 micrometers. It is further preferred that the flexible sheet material is easily sealable and capable of maintaining mechanical integrity while holding a capacity of up to 10 liters of water, preferably a capacity of up to 6 litres, most preferably a holding capacity of upto 3 litres of fluid. The plastic sheet material may be selected for the desired tensile modulus. A higher tensile modulus of elasticity means that the material is more rigid and more stress is required to produce a given amount of strain. It is preferred that the plastic sheet material is flexible and has a tensile modulus between 1.5 to 12 GPa more preferably between 1.5 to 3 GPa.

Plasticizers may be added to a plastic sheet material to achieve the desired tensile modulus. Plasticizers are substances added to rigid plastic to reduce their tensile modulus and improve their flexibility.

In a preferred embodiment the plastic sheet material has a low water vapor transmission rate. Preferably the water vapor transmission rate (WVTR) for 1 mil (=25.4 micrometer) film at 38°C and 90% RH (relative humidity) is less than 200 g/m²/24 hr, more preferably between 3 g/ m²/24 hr to 200 g/ m²/24 hr, still more preferably between 3 g/ m²/24 hr to 30 g/ m²/24 hr and most preferably between 10 g/ m²/24 hr to 25 g/ m²/24 hr.

Examples of suitable plastic sheet material are Biaxial Oriented Polypropylene, HDPE (high density polyethylene), Cast Polypropylene, Biaxial PET (oriented polyester), LDPE (low density polyethylene), EVOH (ethylene vinyl alcohol), OPS (oriented polystyrene), Biaxial Nylon 6, Poly vinyl chloride (PVC), High Impact Polystyrene (HIPS), Styrene Maleic Anhydride (SMA), Acrylonitrile Butadiene Styrene (ABS), Polypropylene (PP), Polycarbonate (PC) and laminates thereof. Especially preferred are Poly vinyl chloride (PVC), High Impact Polystyrene (HIPS), Styrene Maleic Anhydride (SMA), Polyethylene terephthalate (PET), Polyolefins, Acrylonitrile Butadiene Styrene (ABS), Polypropylene (PP), Polycarbonate (PC) and laminates thereof. The most preferred sheet material is a laminate of PET and a poly ethylene material.

A further preferred embodiment of the plastic sheet material is transparency. Transparency of the plastic sheet material may be altered by blending in colorants and opacifiers. The colorants are preferably those that block specific wavelength of light. These colorants prevent the growth of algae on the plastic sheet material. It is preferred to add the colorant in one or two panels of the plastic sheet material.

It is also preferred to have a transparent portion to see the water inside the device. The transparent portion enables to see the level of water inside the various chambers. To facilitate this purpose, a portion of the plastic sheet material may contain colorant or opacifiers and yet another portion of it is transparent.

It is preferred that sunlight is prevented from entering into specific chambers. Microbial/algal growth that may occur in the presence of sunlight is avoided by altering the transparency of the plastic sheet material to light rays of specific wavelength. It is also preferred by some consumers to have a non-transparent plastic sheet material to avoid the dirt deposit in the inlet chamber from being seen. In the water filtration device the microbial growth is especially an issue till the water passes the through the disinfection cartridge, the dirt deposition may be an issue up to the scavenger unit, but at least in the inlet chamber.

The plastic sheet material is preferably of food grade. Examples of the suitable food grade plastic sheet material include polyolefins, Poly vinyl chloride (PVC), High Impact Polystyrene (HIPS), polyethylene (PE), polypropylene (PP), polyesters (PET, PEN, PC), ionomers, ethylene vinyl acetate (EVA), polyamides (PA), polyvinyl chloride (PVC), polyvinylidene chloride (PVdC), polystyrene (PS), styrene butadiene (SB), acrylonitrile butadiene styrene (ABS), ethylene vinyl alcohol (EVOH), polymethyl pentene (TPX), high nitrile polymers (HNP), fluoropolymers (PCTFE/PTFE), cellulose-based materials, polyvinyl acetate (PVA) and laminates thereof. More preferred are Polyethylene, Polyethylene terephthalate (PET), polyvinyl chloride and laminates thereof.

Another preferred embodiment of the plastic sheet material is the heat sealability. Heat sealing is done to create the chambers and to seal the holding tube to the plastic sheet material. It is preferred that the plastic sheet material is resistant to the high temperature used for sealing. Multilayer laminate sheet with a suitable tie layer that binds the two different materials may also be used. Examples of the suitable plastic sheet material include multilayer laminate of PE and PET, monolayer PVC. A particularly preferred material is a PE-PET multilayer laminate.

Another preferred embodiment of the plastic sheet material is the resistance to disinfection agents especially to halogen based disinfecting agents and more preferably to the chlorine based disinfecting agents. This feature is especially relevant to the chambers in contact with the water dissolved with the biocide agent. It is preferred that the plastic sheet material is resistant to a chlorine concentration of 2 to 50 ppm, more preferably 5 to 15 ppm. A particularly preferred concentration is 8-10 ppm of chlorine. Examples of suitable plastic sheet material include PVC (Poly vinyl chloride), LDPE (low density polyethylene), HDPE (high density polyethylene), Polypropylene (PP), and Polycarbonate (PC). Suitable agents may be added to other materials to provide this chemical resistance.

In the context of the present invention different materials may be used for different chamber, e.g. a chlorine resistant material for the dwell chamber, a non-transparent material for the inlet chamber and food grade material for the optional storage chamber.

### Inlet chamber

The inlet chamber is formed by sealing a compartment into the plastic sheet material housing, comprising a disinfection cartridge at the bottom of the inlet chamber in fluid communication with the top of a dwell chamber.

The inlet chamber is for pouring an amount of water into the top of the device, which has a predetermined maximum as set by the volume of the inlet chamber.

The inlet chamber preferably holds between 0.5 to 10 liters, preferably between 1 and 8 liters, more preferably between 4 and 7 liters.

The inlet chamber may optionally comprise a sediment filter as water inlet point at the top of the inlet chamber.

The sediment filter is preferably a washable or replaceable sediment filter for removing fine dust and other micro-particulates. The sediment filter may be a non-woven fabric preferably a microporous fabric. The sediment filter removes visual particles down to 100 micrometers.

The disinfection cartridge may dispense either liquid or solid biocide. Preferably the biocide is present in solid form and leaches into the water at a controlled rate when the water contacts the surface of the solid. More preferably the solid is in the form of tablets. It is preferred that the biocide is a chemical that delivers available halogen to the water to ensure kill of the microorganisms.

The most commonly used biocides are halide based biocides, including chlorine, fluorine, bromine and iodine based biocides. Chlorine based biocides are especially preferred. Typical chlorine based biocides include hypochlorites and cyanuric acids (including TCCA and NaDCCA).

The most commonly used biocides are halide based biocides, including chlorine, fluorine bromine and iodine based biocides. Chlorine based biocides are especially preferred. Typical chlorine based biocides include chlorinated trisodium phosphate, Sodium or Potassium or calcium hypochlorite, the various N-chlorinated compounds known in the art to release active chlorine such as sodium or potassium dichloroisocyanurate, trichlorocyanuric acid, monochloramine, dichloramine, [(monotrichloro)- tetra(monopotassium dichloro)] pentaisocyanurate, 1,3-dichloro-5,5-dimethylidanotone, Chloramine T, p-toluene-sulfodichloroamide, thrichloromelamine, N-chloramine, N-chlorosuccinimide, N,N'-dichloroazodicarbonamide, N-chloroacetyl-urea, N,N-dichloroazodicarbonamide, N-chloroacetyl-urea,N,N-dichlorbiurile,chlorinated dicyandiamide.

*A preferred combination of bromine and chlorine based biocides is bromochlorodimethylhydantoin (BCDMH) and trichloroisocyanuric acid (TCCA) in suitable ratios.*

For human consumption, some of the Bromine bleach may not always be acceptable for use in the device.

Alternatively, the biocide may be dispensed in the form of a predefined dose, suitable for disinfecting one batch of water. This may be done in the form of loose powder, small tables, granules.

### Dwell chamber

The dwell chamber is formed by sealing a compartment into the plastic sheet material housing, in fluid communication with the top of the scavenger unit through a flow restrictive device, such as a valve. The dwell chamber is provided with an air vent.

The dwell chamber is to provide contact time between the water and the biocide. It is preferred that the bottom of the dwell chamber has a flow restricting means for providing the contact time.

The contact time is preferably in the range of 2 to 200 minutes, more preferably from 3 to 120 minutes, more preferably the residence time is in the range of 5 to 30 minutes, still more preferably 10 to 20 minutes.

The flow restricting means may be a valve, a narrow passage or any other means providing for restricting or blocking the flow from the dwell chamber to the scavenger unit.

Preferably a valve may be included between the dwell chamber and the scavenger unit for the consumer to open the valve and remove the biocide after the prescribed contact time. Alternatively the valve in the scavenger unit may be used for regulating the flow from the dwell chamber to the scavenger unit. A preferred feature for defining the residence time is an automatic timer. The automatic timer may be based either volume control or time dependent. Yet preferred is a timer linked with the biocide dosing disinfection cartridge. The latter is preferred for controlling the contact time of the water with the biocide, before the biocide is removed by the scavenger unit.

### Scavenger unit

The scavenger unit comprises scavenger filter; and a valve. The scavenger filter is preferably a carbon filter. The scavenger filter separates the dispensed biocide from the water.

The scavenger filter is preferably bacteriostatic activated carbon.

It is preferred that the scavenger filter is in the form of a cast block, preferably a melt cast block.

The scavenger filter is made of a suitable material such as carbon, in the form of powder or granules and compressed into an appropriate shape. Preferably the nature of the carbon may be such that it is suitable for allowing for maximum adsorption and the particle size of the carbon may be so chosen to allow for designing the requisite pore size for effective filtration, when bound together. The material in the block is held together by a binder, which may be a suitable polymer that may be blended with the carbon and heat treated under pressure to sinter the carbon into a block. Preferably the dimension of the block may be chosen to allow for a requisite interaction time for the water with the block to allow for filtration of particles as well as adsorption of organic species on the internal surface of the block. Such suitable carbon blocks are disclosed in W02007/147716, W02010/020513 and W02010/043472. The scavenger unit preferably also removes other dissolved and non-dissolved material from the water on top of the removal of the biocide. For this purpose the filter material may comprise of a fine activated carbon for removing colloidal particles and cysts material and a coarse activated carbon material for removal of organic material, the biocide and biocide by-products.

The valve may be positioned before or after the scavenger unit, though it is preferred to be before. In either case, the valve may be used for tapping purified water from the system at the outlet of the scavenger unit when the outlet of the scavenger unit is at the same time the outlet of the device. In a preferred embodiment the valve of the dwell chamber and the valve of the scavenger unit, may be one and the same.

Optionally there is provided a purified water storage chamber between the outlet of the scavenger and the outlet of the device. In the latter case, the valve is preferably between the bottom outlet of the storage chamber and the outlet of the device.

### Holding tubes

It is preferred that the replaceable components, including the optional sediment filter, the disinfection cartridge and the scavenger filter are fitted into the device in an attachably detachable manner. One preferred means to achieve this is to fit a holding tube into the housing, into which the replaceable component may be fitted. It is preferred that the holding tube is either flexible or flat, to provide easier folding when the replaceable units are removed. The replaceable component preferably is positioned in the holding tube by a closing system that may be a click, thread or bayonet closing.

### Air vents

It is preferred to provide air vents in the chambers such that the pressure in the chambers is equalized with the atmosphere. As a result, the flow of water is facilitated and a higher flow of water can be maintained as air locks are not allowed to form in the chambers. The air vents allow for displacement of air in the chambers as water is flowing thereinto.
It is particularly desirable to provide the dwell chamber and the storage chamber with air vents.

### Manufacturing method

Although different ways to manufacture the device according to the invention are envisaged, one preferred route is given herein below.

The method for manufacturing the water purification device involves the steps of placing holding tubes for the cartridges (for sediment filter, scavenger unit and disinfection cartridge) on the first plastic sheet material followed by placing the second plastic sheet material and heat sealing the two layers of plastic sheet material at the required seams to weld the holding tubes with the plastic sheet material, The sealing of the first and the second plastic sheet material also creates chambers. The holding tubes hold the disposable cartridges. The cartridge is positioned in the holding tube by a closing system that may be a click, thread or bayonet closing. The inlet chamber has an optional sediment filter fitted into the holding tube at the water inlet point at the top of the chamber and a disinfection cartridge fitted in the holding tube at the bottom of the inlet chamber. A horizontal seal separates the inlet chamber and the dwell chamber. A second horizontal seal separates the dwell chamber from the scavenger unit. The scavenger unit consists of a scavenger filter fitted in the holding tube and a valve welded with the plastic sheet material before the scavenger unit.

In context of the present invention the first sheet and second sheet may also be formed by folding a single sheet material, such that only the remaining side is sealed together to form the chambers, or even a tubular sheet material in which only the chamber dividing seals are formed by heat sealing.

The water purification device may also be in the form of a kit consisting of a flexible housing, sediment filter, disinfection cartridge, scavenger filter, delay timer, hooks or loops, and an instruction for use. The instruction for use consisting of method of installation of the device and the method of use.

### Water purification method

To be used the water purification device may be unfolded, cartridges positioned in the holding tube using the locking system, filled with water to be purified and and hung to a solid support like a wall or a tree to induce gravity effected filtration.

The invention further provides a method for purifying water comprising the steps of filling the water to be purified into the inlet chamber of the device according to the invention; the inlet chamber being in fluid communication with a disinfection cartridge wherein a biocide is released into the water; the disinfection cartridge being in fluid communication with a dwell chamber where it is held for a time period in the range of 2 to 200 minutes ; the dwell chamber being in fluid communication with a valve for releasing the water into a storage chamber through a scavenger filter for the removal of excess biocide present in the outlet water from the dwell chamber.

### Mounting

The invention further provides a means to hang the water purification device to a solid support. The water purification device may be provided with hooks to hang the device to a wall. Alternatively the water purification device may be provided with a stand onto which the water purification device may be hung. Yet another option is a stand with a foot that may stand on the horizontal plane and attached to the stand are upstanding poles to which the water purification device may be attached using slits provided on the sides of the flexible housing or using clamps that may be fixed to upstanding poles of the stand.

### DESCRIPTION OF THE FIGURES

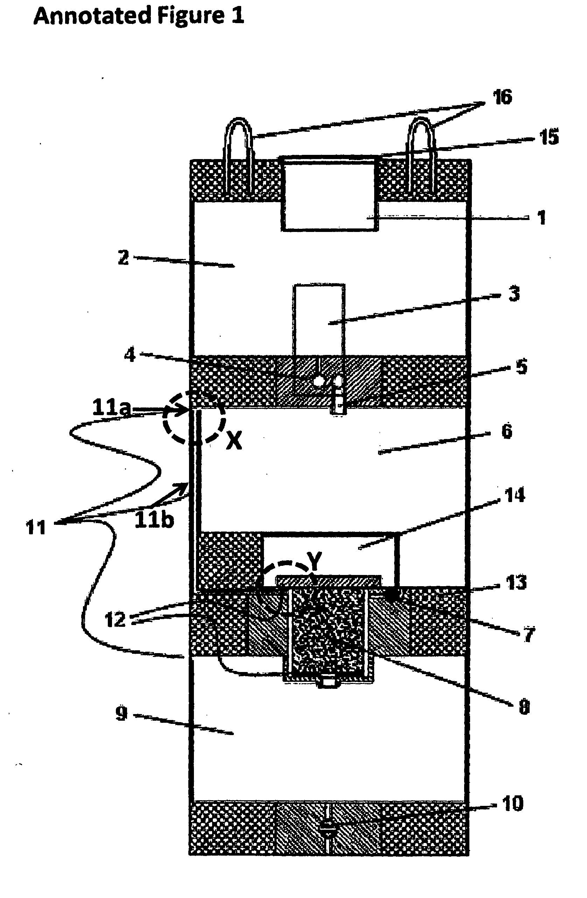

In figure 1 a water purification device according to the invention is shown. Sealed into the top seam, the device has hanging hooks (16) as well as a collar (15) for holding the sediment filter (1), at the top of the inlet chamber (2). At the bottom of the inlet chamber is a water inlet (4) through which fluid enters the disinfection cartridge (3) and then through the water outlet (5) leaves the disinfection cartridge into the dwell chamber (6). At the bottom of the dwell chamber is the dwell valve (7) and a scavenger filter (8). Water tight seals (12) seal the scavenger filter on either side. Close to the scavenger filter, is an opening for accessing scavenger filter (14). Sealing area (13) extends on either side of the scavenger filter separating the dwell chamber from the storage chamber (9). Outlet valve (10) at the bottom of the storage chamber controls the release of filtered water. Air vents (11) run vertically along the edge of the device.

The invention will now be demonstrated with examples. The examples are by way of illustration only and do not limit the scope of the invention in any manner.

### EXAMPLES

### Example 1

Efficiency of the device in removing particulates and turbidity and scavenging of residual biocide were determined by using the device described in Figure 1.

### i. Procedure for measurement of Turbidity:

Test water (3L) comprising of particulates, organic matter and salts was poured into the sediment filter provided in the inlet chamber. During the flow cycle, water flowed through the sediment filter at the top of the inlet chamber where the particulate matter was removed. The water from the inlet chamber flowed through the disinfection cartridge containing trichloroisocyanuric acid as the biocide into the dwell chamber. The water was then released from the dwell chamber immediately by operating the valve to flow through the scavenger filter and into the storage chamber. Samples of water from 3 different stages namely a sample of water before pouring into the sediment filter (input water), sample of water after flowing through the sediment filter and a sample of water after flowing through the scavenger filter were collected and the turbidity was measured using a turbidity meter.

### ii. Procedure for evaluation of scavenger filter efficacy for removal of biocide:

Experimental procedure was as described in Example 1 for turbidity measurement but the samples of water to measure the chlorine level was from 2 different stages namely a sample of water after flowing through the disinfection cartridge and a sample of water after flowing through the scavenger filter were collected and measured for chlorine concentration. The amount of chlorine was measured in water samples using a chlorine meter. The results are expressed in terms of concentration in ppm.

The data on turbidity and scavenging efficiency are provided in Table 1.

**Table 1**

| Turbidity (NTU) | | | Chlorine (ppm) | |
|---|---|---|---|---|
| Input Test water | After Sediment Filter | After Scavenger Filter | Before Scavenger Filter | After Scavenger Filter |
| 10.10 | 1.51 | 0.04 | 10.71 | 0.01 |
| 10.10 | 1.00 | 0.04 | 11.11 | 0.01 |

From the results in Table 1, it is clear that the device according to the present invention achieves reduction in the turbidity level and scavenging of the residual biocide in the downstream water. A significant reduction in the turbidity levels is seen in water sample collected after sediment filter and a further reduction in the turbidity of water after passing through the scavenger filter which shows the removal of the particulates from the input water producing clear water in the output. The results also confirm the presence of requisite amount of chlorine (for disinfection) in the dwell chamber as shown in the concentration of chlorine in the water before it flows through the scavenger filter. Further a comparison of the chlorine content in the water before water passes through the scavenger filter and after water passes through the scavenger filter showed a reduction in the concentration of chlorine content in the water after the scavenger filter confirming the scavenging efficacy of the scavenger filter to remove the chlorine from the output water.

### Example 2

### Efficacy of the device in meeting US EPA log reduction criteria on microbiology.

The device was tested as per standard protocol to determine if it meets US EPA criteria in reducing levels of bacteria, virus and cyst. Standard microbiological methods as detailed in NSF P231 & NSF S53 was used for analysis of bacteria, virus and cyst reduction in the water filtered using the device according to the invention.

The device as shown in Figure 1 was conditioned by passing 5 liters of water before starting the trial. It was ensured that all the water was drained out. The dwell valve (7) and the outlet valve (10) were then kept in closed position.

8 liters of seeded water was prepared as per NSF P231 & P S53 by loading > Log 7 concentration of bacteria, >Log 5 concentration of virus and >Log 4 concentration of cysts. The count from the seeded water was determined to obtain the load of organisms to start with. The seeded water was poured into the top chamber and allowed to pass through the sediment filter (1), disinfection cartridge (3) into the dwell chamber (6). After all the water was collected in the dwell chamber, it was retained therein for 10 minutes.
At the end of ten minutes, the dwell valve was opened and the water was allowed to pass through the scavenger and collect in the storage chamber. Water samples from the storage chamber were collected and analyzed immediately for bacteria, virus and cysts. The log reduction for bacteria, virus and cyst was calculated based on the counts in the input and the output samples. The data on the efficacy of the device in removing bacteria, virus and cysts is presented in Table 2.

**Table 2**

| Microorganism | Input log | Final Count | Log reduction |
|---|---|---|---|
| Bacteria | 7.332 | 0 | 7.332 |
| Virus | 5.45 | 0 | 5.45 |
| Cyst | 4.47 | 0 | 4.47 |

The results presented in Table 2 show that the device is capable of reducing the numbers of bacteria, virus and cysts by greater that log 6, 4, 3 respectively as specified in the US EPA criteria (NSF P231).

### Example 3

### Effect of air vent on flow of water.

The device as shown in Figure 1, was used and the dwell valve (7) and the outlet valve (10) were then kept in closed position. 2.5 liters of water was poured into the top chamber and the time taken for all the water to collect in the dwell chamber was monitored. Later the dwell valve was opened and the time taken for all the water to flow from the dwell chamber to the storage chamber was monitored.

In another device where the air vent 11 was not provided the same procedure was repeated. The data are presented in table 3.

**Table 3**

| Device type | Time taken water to flow from top chamber to dwell chamber | Time taken water to flow from dwell chamber to storage chamber |
|---|---|---|
| Device as in figure 1 with air vent | 7 minutes | 6.45 minutes |
| Device without air vent. | 7.30 minutes. Water tends to overflow through the ventilator port on the disinfection cartridge. This acts like an air vent. | 10 minutes. The storage chamber puffed up with air pressure. |

## Claims

1. A light-weight point of use water purification device comprising a housing of flexible, foldable, plastic sheet material comprising:
a. an inlet chamber (2), formed by sealing a compartment into the plastic sheet material housing, comprising
i. a sediment filter (1) as water inlet point at the top of the inlet chamber; and
ii. a disinfection cartridge (3) at the bottom of the inlet chamber;
in fluid communication with the top of
b. a dwell chamber (6), formed by sealing a compartment into the plastic sheet material housing, in fluid communication with the top of
c. a scavenger unit comprising
i. a scavenger filter (8); and
ii. a valve (7);
wherein the dwell chamber is provided with an air vent (11).

2. A device according to claim 1 wherein the scavenger unit is in fluid communication with a storage chamber (9).

3. A device according to any one of the preceding claims, wherein the sediment filter (1), disinfection cartridge (3) and the scavenger unit are integrally sealed into the housing.

4. A device according to any one of the preceding claims, wherein the scavenger filter (8) comprises bacteriostatic activated carbon.

5. A device according to any one of the preceding claims, wherein the disinfection cartridge (3) comprises a chemical that delivers active biocide to the water.

6. A device according to any one of the preceding claims, wherein the wall thickness of the housing plastic sheet material is in the range of 20 micrometers to 3000 micrometers.

7. A device according to any one of the preceding claims, wherein the said plastic sheet material is halogen resistant.

8. A device according to any one of the preceding claims, wherein the plastic sheet material has a water vapor transmission rate of less than 200 g/m²/24 hr for 1 mil (=25.4 micrometer) film at 38°C and 90% relative humidity.

9. A device according to any one of the preceding claims, wherein the plastic sheet material is blended with colorants or opacifiers.

10. A device according to anyone of claims 1 to 9, wherein the plastic sheet material is blended with a light absorbing colorant for wavelengths above 350 nm.

11. A method for manufacturing the device according to anyone of claims 1 to 10, comprising the steps of
a) placing the disinfection cartridge, the scavenger filter, the valve and the sediment filter between two layers of plastic sheet material, inside the crease of a single folded sheet of plastic sheet material or inside a tubular sheet of the plastic sheet material;
b) sealing the disinfection cartridge, the scavenger filter, the valve and the sediment filter to the plastic sheet material; and
c) creating the chambers by sealing the plastic sheet material together,
wherein steps (b) and (c) may be reversed and wherein the dwell chamber is provided with an air vent.

12. Method for purifying water with the device according to any one of the claims 1 to 10, comprising the steps of:
a) filling the water to be purified into the inlet chamber of the device, and passing said water through the sediment filter;
b) passing the water from the inlet chamber through the disinfection cartridge comprising a chemical that delivers active biocide to the water;
c) allowing the water treated with the biocide and exiting the disinfection cartridge to flow into the dwell chamber;
d) holding the water treated with the biocide in the dwell chamber for a period in the range of 2 to 200 minutes;
e) opening the valve to allow the water to pass from the dwell chamber through the scavenger filter into the storage chamber.

## Patentansprüche

1. Vor-Ort-Leichtbauwasseraufbereitungsvorrichtung, die ein Gehäuse aus einem flexiblen, faltbaren Kunststoffbahnmaterial aufweist und umfasst:
a. eine Eintrittskammer (2), die durch Verschließen eines Abteils in dem Kunststoffbahnmaterialgehäuse gebildet wird, die umfasst:
i. einen Sedimentfilter (1) als Wassereintrittspunkt an dem oberen Ende der Eintrittskammer; und
ii. eine Desinfektionskartusche (3) an dem unteren Ende der Eintrittskammer;
in Fluidkommunikation mit der Oberseite
b. einer Verweilkammer (6), die durch Verschließen eines Abteils in dem Kunststoffbahnmaterialgehäuse gebildet wird, in Fluidkommunikation mit dem oberen Ende
c. einer Scavenger-Einheit, die umfasst
i. einen Scavenger-Filter (8); und
ii. ein Ventil (7);
wobei die Verweilkammer mit einer Entlüftung (11) versehen ist.

2. Vorrichtung nach Anspruch 1, wobei die Scavenger-Einheit in Fluidkommunikation mit einer Speicherkammer (9) ist.

3. Vorrichtung nach einem der vorhergehenden Ansprüche, wobei der Sedimentfilter (1), die Desinfektionskartusche (3) und die Scavenger-Einheit einteilig in dem Gehäuse eingeschlossen sind.

4. Vorrichtung nach einem der vorhergehenden Ansprüche, wobei der Scavenger-Filter (8) bakteriostatisch aktivierten Kohlenstoff umfasst.

5. Vorrichtung nach einem der vorhergehenden Ansprüche, wobei die Desinfektionskartusche (3) ein Chemikalie umfasst, die aktives Biozid an das Wasser abgibt.

6. Vorrichtung nach einem der vorhergehenden Ansprüche, wobei die Wanddicke des Gehäusekunststoffbahnmaterials in einem Bereich von 20 Mikrometer bis 3000 Mikrometer liegt.

7. Vorrichtung nach einem der vorhergehenden Ansprüche, wobei das Kunststoffbahnmaterial halogenbeständig ist.

8. Vorrichtung nach einem der vorhergehenden Ansprüche, wobei das Kunststoffbahnmaterial eine Wasserdampfübertragungsrate von weniger als 200 g/m²/24 h für einen 1 mil-Film (=25,4 Mikrometer-Film) bei 38° und 90 % relativer Luftfeuchtigkeit aufweist.

9. Vorrichtung nach einem der vorhergehenden Ansprüche, wobei das Kunststoffbahnmaterial mit Farbstoffen oder Trübungsmitteln vermischt ist.

10. Vorrichtung nach einem der Ansprüche 1 bis 9, wobei das Kunststoffbahnmaterial mit einem lichtabsorbierenden Farbstoff für Wellenlängen über 350 nm vermischt ist.

11. Verfahren zum Herstellen der Vorrichtung nach einem der Ansprüche 1 bis 10, das die Schritte umfasst:
a) Setzen der Desinfektionskartusche, des Scavenger-Filters, des Ventils und des Sedimentfilters zwischen zwei Schichten aus Kunststoffbahnmaterial, in die Falte einer einzelnen gefalteten Bahn des Kunststoffbahnmaterials oder in eine röhrenförmige Bahn des Kunststoffbahnmaterials;
b) Einschließen der Desinfektionskartusche, des Scavenger-Filters, des Ventils und des Sedimentfilters in das Kunststoffbahnmaterial; und
c) Erzeugen der Kammern durch Verschließen des Kunststoffbahnmaterials mit sich selbst,
wobei die Schritte (b) und (c) umgekehrt werden können und wobei die Verweilkammer mit einer Entlüftung versehen ist.

12. Verfahren zum Reinigen von Wasser mit der Vorrichtung nach einem der Ansprüche 1 bis 10, das die Schritte umfasst:
a) Füllen des zu reinigenden Wassers in die Eintrittskammer der Vorrichtung und Führen des Wassers durch den Sedimentfilter;
b) Führen des Wassers von der Eintrittskammer durch die Desinfektionskartusche, die eine Chemikalie umfasst, die ein aktives Biozid an das Wasser abgibt;
c) Gestatten, dass das mit dem Biozid behandelte und die Desinfektionskartusche verlassende Wasser in die Verweilkammer fließt;
d) Halten des mit dem Biozid behandelten Wassers für eine Dauer im Bereich von 2 bis 200 Minuten in der Verweilkammer;
e) Öffnen des Ventils, um dem Wasser zu gestatten, von der Verweilkammer durch den Scavenger-Filter in die Speicherkammer zu fließen.

## Revendications

1. Point léger de dispositif de purification d'eau usée comprenant un boîtier constitué d'un matériau en feuille de plastique pliable et flexible, comprenant :
a. une chambre d'entrée (2), formée en isolant un compartiment dans le boîtier de matériau en feuille de plastique, comprenant :
i. un filtre à sédiments (1) comme point d'entrée d'eau au sommet de la chambre d'entrée ; et
ii. une cartouche de désinfection (3) au fond de la chambre d'entrée ;
en communication fluidique avec le sommet de :
b. une chambre de repos (6) qui est formée en isolant un compartiment dans le boîtier de matériau en feuille de plastique, en communication fluidique avec le sommet de :
c. une unité d'épuration, comprenant :
i. un filtre d'épuration (8) ; et
ii. une soupape (7) ;
dans lequel la chambre de repos est pourvue d'un évent d'aération (11).

2. Dispositif selon la revendication 1, dans lequel l'unité d'épuration est en communication fluidique avec une chambre de stockage (9).

3. Dispositif selon l'une quelconque des revendications précédentes, dans lequel le filtre à sédiments (1), la cartouche de désinfection (3) et l'unité d'épuration sont intégralement isolés dans le boîtier.

4. Dispositif selon l'une quelconque des revendications précédentes, dans lequel le filtre d'épuration (8) comprend du charbon actif bactériostatique.

5. Dispositif selon l'une quelconque des revendications précédentes, dans lequel la cartouche de désinfection (3) comprend un produit chimique qui délivre un biocide actif dans l'eau.

6. Dispositif selon l'une quelconque des revendications précédentes, dans lequel l'épaisseur de paroi du matériau en feuille de plastique du boîtier est comprise dans la gamme de 20 micromètres à 3000 micromètres.

7. Dispositif selon l'une quelconque des revendications précédentes, dans lequel ledit matériau en feuille de plastique est résistant aux halogènes.

8. Dispositif selon l'une quelconque des revendications précédentes, dans lequel le matériau en feuille de plastique présente un taux de transmission de vapeur d'eau qui est inférieur à 200 g/m²/24 heures pour un film de 1 mil (= 25,4 micromètres) à 38°C et une humidité relative de 90 %.

9. Dispositif selon l'une quelconque des revendications précédentes, dans lequel le matériau en feuille de plastique est mélangé avec un colorant absorbant la lumière ou des opacifiants.

10. Dispositif selon l'une quelconque des revendications 1 à 9, dans lequel le matériau en feuille de plastique est mélangé avec un colorant absorbant la lumière pour des longueurs d'onde supérieures à 350 nm.

11. Procédé de fabrication du dispositif selon l'une quelconque des revendications 1 à 10, comprenant les étapes suivantes :
a) placer la cartouche de désinfection, le filtre d'épuration, la soupape et le filtre à sédiments entre deux couches de matériau en feuille de plastique, à l'intérieur du pli d'une seule feuille pliée de matériau en feuille de plastique ou à l'intérieur d'une feuille tubulaire du matériau en feuille de plastique ;
b) isoler la cartouche de désinfection, le filtre d'épuration, la soupape et le filtre à sédiments contre le matériau en feuille de plastique ; et
c) créer les chambres en fermant sur lui-même le matériau en feuille de plastique,
dans lequel les étapes (b) et (c) peuvent être inversées, et dans lequel la chambre de repos est pourvue d'un évent d'aération.

12. Procédé de purification de l'eau en utilisant le dispositif selon l'une quelconque des revendications 1 à 10, comprenant les étapes suivantes :
a) verser l'eau à purifier dans la chambre d'entrée du dispositif, et faire passer ladite eau à travers le filtre à sédiments ;
b) faire passer l'eau à partir de la chambre d'entrée à travers la cartouche de désinfection contenant un produit chimique qui délivre un biocide actif dans l'eau ;
c) permettre à l'eau traitée avec le biocide et sortant de la cartouche de désinfection de s'écouler dans la chambre de repos ;
d) maintenir l'eau traitée avec le biocide dans la chambre de repos pendant une période comprise dans la gamme de 2 à 200 minutes ; et
e) ouvrir la soupape afin de permettre à l'eau de passer à partir de la chambre de repos à travers le filtre d'épuration dans la chambre de stockage.
